# EUROPÄISCHE PATENTSCHRIFT

(11) **EP 1 496 665 B1**
(45) Veröffentlichungstag und Bekanntmachung des Hinweises auf die Patenterteilung: **28.08.2013**
(21) Anmeldenummer: 04016224.0
(22) Anmeldetag: 09.07.2004
(51) Int. Cl.: H04L 29/06

(54) **Verfahren zur Festlegung von Sicherheitseinstellungen in einem Automatisierungsnetz**
Method for security configuration in an automisation network
Procédé de configuration de sécurité dans un réseau d'automatisation

(30) Priorität: 10.07.2003 DE 10331310
(43) Veröffentlichungstag der Anmeldung: 12.01.2005
(73) Patentinhaber: Siemens Aktiengesellschaft, 80333 München (DE)
(72) Erfinder: Arnold, Johann, 90530 Wendelstein (DE); Gerlach, Hendrik, 91058 Erlangen (DE); Herberth, Harald, 90522 Oberasbach (DE); Köbinger, Franz, 90475 Nürnberg (DE)

(56) Entgegenhaltungen:
- EP-A1- 1 094 682
- DE-A1- 10 124 800
- US-A1- 2003 005 328
- MAN LI NOKIA DAVID ARNESON N/A AVRI DORIA LTU JAMIE JASON INTEL CLIFF WANG SMARTPIPE MARKUS STENBERG SSH: "IPsec Policy Information Base; draft-ietf-ipsp-ipsecpib-06.txt", 1. November 2002 (2002-11-01), IETF STANDARD-WORKING-DRAFT, INTERNET ENGINEERING TASK FORCE, IETF, CH, XP015021328, ISSN: 0000-0004 * Seite 4, Zeile 13 - Seite 8, Zeile 15 *

## Beschreibung

Die Erfindung betrifft ein Verfahren zur Festlegung von Sicherheitseinstellungen in einem Automatisierungsnetz für einen Datenzugriff eines ersten Teilnehmers auf einen zweiten Teilnehmer über das Automatisierungsnetz.

Teilnehmer können beispielsweise Server, Programmiergeräte, Bedien- und Beobachtungstationen, Servicegeräte zur Wartung oder Diagnose, Automatisierungsgeräte, dezentrale Peripherie oder Feldgeräte sein, zum Beispiel Messumformer oder Stellglieder, die in einem gemeinsamen Automatisierungsnetz zur Übertragung von Daten miteinander verbunden sind. Sie sind Bestandteile eines Automatisierungssystems, das zur Überwachung eines technischen Prozesses, zum Beispiel eines Fertigungsprozesses, eingesetzt wird und an sich bekannt ist. Derartige Automatisierungsnetze wurden bisher hierarchisch in mehrere Ebenen eingeteilt, zum Beispiel Prozess-, Automatisierungs- und zentrale Leitebene. Dabei wurden Komponenten der jeweiligen Ebene über eine Datenübertragungseinheit, ein so genanntes Gateway, miteinander verbunden. Automatisierungskomponenten der Prozessebene und/oder der Automatisierungsebene wurden horizontal mittels eines so genannten Feldbussystems und zur nächst höheren Ebene, zum Beispiel zur zentralen Leit- oder Steuerebene, vertikal mittels eines Ethernet-Bussystems miteinander verbunden. Feldbusse sind speziell auf die Erfordernisse der Automatisierungstechnik ausgerichtet. Kommunikationsmedien und Protokolle für Feldbusse sind in der Bürowelt in der Regel nicht verbreitet. Da Zugriffe von der zentralen Leit- und Steuerebene auf die Automatisierungs- oder Feldebene nur über Gateways möglich waren, wurden Hackerangriffe auf die unteren Ebenen des Automatisierungsnetzes erschwert. Zunehmend erfolgt heute die horizontale Verbindung der Automatisierungskomponenten einer Ebene ebenfalls mittels eines Ethernet-Bussystems. Mit der zunehmenden Verbreitung von Ethernet auch auf den unteren Ebenen eines Automatisierungsnetzes wachsen die verschiedenen Ebenen enger zusammen und spezielle Gateways sind aus rein kommunikationstechnischer Sicht nicht länger notwendig. Damit sind Hackerangriffe auch auf die unteren Ebenen eines Automatisierungsnetzes leichter möglich.

Ein weiterer Trend ist die zunehmende Verschmelzung von Büround Produktionsnetzen, die als Teilbereiche eines Automatisierungsnetzes angesehen werden können. Daraus ergeben sich insbesondere aus sicherheitstechnischer Sicht neue Probleme. Über das Büronetz in das Produktionsnetz eingetragene Störungen der Automatisierungsgeräte können den Produktionsbetrieb unter Umständen empfindlich stören oder beeinträchtigen. Die damit verbundenen Risiken, zum Beispiel Produktionsausfälle bis hin zu Gefahren für Menschenleben, sind oft deutlich höher als bei Störungen, die auf ein Büronetz begrenzt sind. Störungen des Produktionsnetzes vom Büronetz aus können beispielsweise hervorgerufen werden durch Fehlbedienungen, zum Beispiel wegen Angabe falscher IP-Adressen, Viren, Trojaner oder Würmer, die versuchen, sich über Personal Computer des Büronetzes im Netzwerk auszubreiten, und die dabei unter Umständen auch den Bereich des Produktionsnetzes erreichen, weiterhin durch Mitarbeiter, die beispielsweise TCP/IP-Netzwerk-Tools ausprobieren oder durch Angriffe von Mitarbeitern innerhalb der automatisierungstechnischen Anlage, die, wenn sie passiver Natur sind, als Spionage und, wenn sie aktiver Natur sind, als Sabotage bezeichnet werden können. Es ist daher erforderlich, bestimmte Teile des Automatisierungsnetzes vor unerlaubten Zugriffen zu schützen.

Aus der DE 101 24 800 A1 ist es bekannt, funktions- und/oder geräterelevante Daten zwischen verschiedenen Geräten eines Prozessautomatisierungssystems zumindest zum Teil verschlüsselt auszutauschen. Dadurch soll eine flexible und zugleich sichere Handhabung ausgewählter wichtiger Daten des Prozessautomatisierungssystems ermöglicht werden. Die Verschlüsselung wird direkt in den Endgeräten vorgenommen. Dies erfordert eine größere Leistungsfähigkeit aller Endgeräte, die an einer verschlüsselten Datenübertragung beteiligt sind.

Auf der Internetseite unter der Adresse www.thought.net/jason/bridgepaper/node9.html wurde am 01.04.2003 ein Kapitel "bridging and IPsec" der Öffentlichkeit zugänglich gemacht. Es wird eine Bridge beschrieben, die um IPsec-Fähigkeiten erweitert ist. Auf einer Seite der Bridge eingehende Nachrichten im Ethernet-Format werden entsprechend dem IPsec-Protokoll, das auf Layer 3 des ISO-OSI 7-Schichten-Modells angesiedelt ist, verschlüsselt auf der anderen Seite der Bridge ausgegeben und können so geschützt vor Zugriffen über einen unsicheren Netzwerkabschnitt übertragen werden. Eine Anwendung auf Automatisierungsnetze ist nicht beschrieben.

Der Aufbau von sicheren Kanälen erfordert eine geeignete Parametrierung der Kommunikationspartner. Sie schließt in der Regel Festlegungen ein, mit welchen Partnern sicher zu kommunizieren ist und mit welchen nicht. Beispielsweise kann mit Automatisierungsgeräten im Produktionsnetz eine sichere Kommunikation erforderlich sein und zur Kommunikation mit Rechnern im Büronetz eine ungesicherte Kommunikation ausreichen. Eine solche Parametrierung, das heißt Festlegung von Sicherheitseinstellungen, ist bisher manuell vorzunehmen. Beispielsweise ist bei dem IPsec-Protokoll anzugeben, zu welchen Ziel-IP-Adressen IPsec zu benutzen ist und zu welchen nicht. Zusätzlich sind weitere Parameter, zum Beispiel ein Tunnelmode oder ein Transportmode, anzugeben. Andere Protokolle, wie zum Beispiel Kerberos, SSL oder SSH, erfordern in ähnlicher Weise eine manuelle Festlegung von Sicherheitseinstellungen in den an der Kommunikation beteiligten Netzwerkteilnehmern.

Aus der US 2003/0005328 Al ist ein Verfahren zum dynamischen Konfigurieren eines Tunnels bekannt, an welchem ein Client und ein Gateway beteiligt sind. Der Client leitet eine Verhandlung mit dem Gateway ein. Das Gateway sendet Informationen zu dem Client, aus welchen dieser eine Sicherheitskonfiguration extrahiert. Unter Verwendung der Sicherheitskonfiguration wird ein Tunnel zwischen Client und Gateway hergestellt. Die Möglichkeit einer ungesicherten Kommunikation wird dort nicht betrachtet.

Der Erfindung liegt die Aufgabe zugrunde, ein Verfahren zur automatischen Festlegung von Sicherheitseinstellungen in einem Automatisierungsnetzwerk zu finden sowie einen zur Durchführung des Verfahrens geeigneten Teilnehmer zu schaffen.

Zur Lösung dieser Aufgabe weist das neue Verfahren der eingangs genannten Art die in Anspruch 1 angegebenen Merkmale auf. Ein zur Durchführung des Verfahrens geeigneter Teilnehmer ist in Anspruch 7 beschrieben. Vorteilhafte Weiterbildungen des Verfahrens sind in den abhängigen Ansprüchen angegeben.

Durch eine Sicherheitseinstellung wird beispielsweise festgelegt, ob ein Datenzugriff gesichert durch einen Tunnel erfolgen muss oder nicht.

Unter dem Begriff "Tunnel" wird im Zusammenhang dieser Erfindung eine Verbindung zwischen zwei oder mehr Teilnehmern des Automatisierungsnetzes verstanden, die bezüglich Authentizität, Integrität und/oder Vertraulichkeit eine in vorteilhafter Weise sichere Datenübertragung gewährleistet. Durch den Tunnel werden die gesamten Telegrammdaten, also Nutzdaten und Header-Informationen eines Telegramms, gesichert übertragen. Zum Aufbau eines Tunnels sind gemeinsame Geheimnisse (Shared Secrets) notwendig. Wird der Tunnel zwischen zwei Partnern aufgebaut, so müssen beide Partner das gleiche Shared Secret oder ein zueinander passendes Public/Private-Key-Paar besitzen. Soll der Tunnel auf mehr als zwei Partner (globaler Tunnel) ausgedehnt werden, so müssen beispielsweise Shared Keys auf alle beteiligten Teilnehmer verteilt werden. Im Falle der Verwendung von Public/Private-Keys müssen bei mehr als zwei Partnern alle Partner untereinander derartige Schlüsselpaare besitzen. Bei der Ver- oder Entschlüsselung von Daten muss das jeweils für den aktuellen Partner geltende Schlüsselpaar herangezogen werden. Die Verwendung von Public/Private-Key-Paaren ist allerdings besonders in größeren Systemen eher kompliziert und aufwendig. Im Falle eines Shared Secrets ist das Verfahren einfach, da alle Teilnehmer den gleichen Schlüssel besitzen, der für alle Teilnehmer verwendbar ist.

Die Erfindung beruht auf der Erkenntnis, dass es insbesondere bei Automatisierungsgeräten, die üblicherweise im Bereich des Produktionsnetzes angeordnet sind, meist sinnvoll ist, die zur Kommunikation erforderlichen Sicherheitseinstellungen fest und nicht ohne Weiteres veränderbar vorzunehmen. Dadurch werden unberechtigte Zugriffe, die hier mit einem erhöhten Risiko verbunden wären, ausreichend erschwert. Hingegen ist es im Büronetz, in welchem Teilnehmer sowohl Kommunikation mit anderen im Büronetz angeordneten Teilnehmern als auch mit besonders zu sichernden Teilnehmern des Produktionsnetzes ausführen, möglich, die Sicherheitseinstellungen in Abhängigkeit des jeweiligen Kommunikationspartners vorzunehmen, da durch deren feste Einstellungen gegebenenfalls bereits ein ausreichender Schutz vorgegeben wird. Die Erkenntnis liegt somit darin, dass es in einem Automatisierungsnetz Teilnehmer gibt, die ohne eine konkret auf das jeweilige Automatisierungssystem abgestimmte, manuelle Parametrierung auskommen. Derartige Teilnehmer können beispielsweise Programmiergeräte sein, die für Diagnosezwecke eingesetzt werden und unter Umständen auch für mehrere Anlagen oder Anlagenteile genutzt werden. Eine jeweilige manuelle Anpassung der Sicherheitseinstellungen auf die verschiedenen Kommunikationspartner oder auf die konkrete Situation in einem Automatisierungssystem wäre mit größerem Aufwand verbunden und würde die Bedienung erschweren. Sie kann in vorteilhafter Weise durch die Erfindung entfallen. Spezielle Kenntnisse des Bedienpersonals zur Vornahme der Sicherheitseinstellungen sind daher nicht notwendig. Zudem ist die Erfindung vorteilhaft bei Automatisierungssystemen anwendbar, da hier die Kommunikation nicht mit beliebigen Partnern, sondern innerhalb einer relativ abgeschlossenen Gerätelandschaft mit einem eingeschränkten Angebot an Diensten und eingeschränkten Geräteressourcen, wobei die Geräte häufig vom gleichen Hersteller stammen, erfolgt.

Bei Teilnehmern, die häufig mit anderen Teilnehmern in einem ungesicherten Modus kommunizieren, führt ein Verfahren besonders schnell zum Aufbau einer Kommunikationsverbindung, bei welchem der Teilnehmer zunächst einen ungesicherten Datenzugriff auf einen anderen Teilnehmer initiiert. Es wird beispielsweise versucht, eine TCP-Verbindung ohne Tunnel zum Partner aufzubauen, das heißt ein Partner, der eine gesicherte Datenübertragung fordert, weist einen derartigen Verbindungsaufbau jedoch ab, da er nur eine gesicherte Datenübertragung akzeptiert. Der Verbindungsaufbau schlägt zunächst fehl. Wird jedoch aufgrund der Sicherheitseinstellungen des gewünschten Kommunikationspartners ein ungesicherter Datenzugriff zugelassen, so kommt eine Kommunikationsverbindung zustande und der Teilnehmer, der den ungesicherten Datenzugriff initiiert hatte, kann seine Sicherheitseinstellung für Zugriffe zu diesem Kommunikationspartner auf ungesicherten Datenzugriff setzen.

In einem anderen Fall, wenn ein Teilnehmer in der Mehrzahl die Möglichkeit eines gesicherten Datenzugriffs erwartet, initiiert der Teilnehmer zunächst einen gesicherten Datenzugriff auf den zweiten Teilnehmer. Er geht dabei davon aus, dass der zweite Teilnehmer beispielsweise einen Verbindungsaufbau mit einem IPsec-Tunnel akzeptiert. Ist der gewünschte Kommunikationspartner ein tunnelfähiges Gerät, beginnt ein normaler IPsec-Tunnelaufbau, zum Beispiel über IPsec-Internet-Key-Exchange (IKE). Zudem setzt der Teilnehmer, der einen gesicherten Datenzugriff initiiert hatte, seine Sicherheitseinstellung für diesen Kommunikationspartner auf gesicherten Datenzugriff. Ist der gewünschte Kommunikationspartner dagegen beispielsweise ein Büro-PC, der keine gesicherte Datenübertragung unterstützt und somit kein IKE kennt, so weist er den gesicherten Datenzugriff ab und der Tunnelaufbauwunsch wird nicht beantwortet.

Der Initiator erkennt dies und führt die Kommunikation mit einem ungesicherten Datenzugriff durch. Die Sicherheitseinstellungen werden entsprechend eingestellt.

Die beiden oben genannten Versuche, einen ungesicherten bzw. einen gesicherten Datenzugriff durchzuführen, können fehlschlagen. In der Regel können solche Fehlversuche erst nach einer bestimmten Wartezeit erkannt werden. Das Abwarten dieser Zeit verlangsamt die Kommunikation. Falls eine Abfrage der Sicherheitseinstellungen des gewünschten Kommunikationspartners schneller durchzuführen ist als den Ablauf der Wartezeit abzuwarten, ist es vorteilhaft, eine derartige Abfrage durchzuführen. Der initiierende Teilnehmer übernimmt dann die Sicherheitseinstellungen des gewünschten Kommunikationspartners und baut die Kommunikationsverbindung in der entsprechenden Betriebsart auf.

Eine Verwendung des IPsec-Protokolls für einen Tunnelaufbau hat den Vorteil, dass ein weit verbreitetes und als relativ sicher geltendes Tunnel-Protokoll zur Anwendung kommt. IPsec erforderte bisher eine Reihe manueller Konfigurationseinstellungen und war daher für eine Reihe von Anwendungsfälle weniger geeignet, beispielsweise für mobile Programmiergeräte, die in verschiedenen Umgebungen, Automatisierungsnetzen oder -systemen eingesetzt wurden. Eine Verwendung in neuer Umgebung erforderte in der Regel ein Umstellen der Sicherheitseinstellungen (Security Policies), beispielsweise eine Eingabe der Adressen tunnelfähiger Partner. Durch das neue Verfahren können Teilnehmer schneller für verschiedene Aufgaben oder für verschiedene Umgebungen eingesetzt werden, da viele manuelle Eingaben entfallen. Zudem wird der Austausch defekter Geräte vereinfacht.

IPsec ist spezifiziert in dem RFC2401 bis 2412, die unter der Internetadresse www.ietf.org/rfc der Öffentlichkeit am 01.04.2003 zugänglich waren. IPsec ermöglicht den Aufbau von sicheren IP-Verbindungen. Die Sicherung erfolgt in Ebene 3 des ISO-OSI 7-Schichtenmodells. Durch seine Anordnung in der Ebene 3 kann der Verkehr aller IP-basierter Applikationen geschützt werden, ohne dass Änderungen oder Anpassungen in den Applikationen erforderlich wären. IPsec beinhaltet die Sicherheitsfunktionen: Verschlüsselung zum Schutz der Vertraulichkeit, Integrität zum Schutz gegen Veränderungen und zum Nachweis der Unverfälschtheit einer Nachricht, Authentifizierung zum Schutz gegen Datenzugriffen unberechtigter Sender, Replay-Protection zum Schutz gegen Paketwiederholungen, beispielsweise durch Angreifer, Schutz vor DoS-Angriffen und Verwaltung von Schlüsseln.

Alternativ zu IPsec können SSL oder SSH als Tunnelprotokoll verwendet werden.

Eine einmal vorgenommene Sicherheitseinstellung abzuspeichern hat den Vorteil, dass Zeit und Ressourcen der Teilnehmer gespart und zugleich die Sicherheit erhöht werden kann. Nachdem ein Teilnehmer ermittelt hat, dass ein gewünschter Kommunikationspartner tunnelfähig ist, wird er, bis eine Einstellung erneut aufgefrischt wird, mit diesem Teilnehmer immer eine gesicherte Datenübertragung durchführen. Eine häufigere Abfrage eines Kommunikationspartners, ob er tunnelfähig ist oder nicht, könnte nämlich Sicherheitslöcher eröffnen. Wenn nämlich ein Angreifer die Abfrage stören oder sogar das Abfrageergebnis verfälschen könnte, wäre er möglicherweise in der Lage, die Kommunikation zwischen diesen Geräten zu unterbinden. Dadurch würde zwar die Sicherheit der Geräte selbst bzw. die Sicherheit der Teilnetze, in denen sich die Geräte befinden, nicht zwangsläufig beeinträchtigt, es könnte jedoch die Verfügbarkeit des Netzwerks für die Datenübertragung vermindert werden.

Anhand der Zeichnungen, in denen ein Ausführungsbeispiel dargestellt ist, werden im Folgenden die Erfindung sowie Ausgestaltungen und Vorteile näher erläutert.

Es zeigen:
- Figur 1: ein Blockschaltbild eines Automatisierungsnetzes und
- Figur 2: eine Tabelle zur Verdeutlichung der Sicherheitseinstellungen.

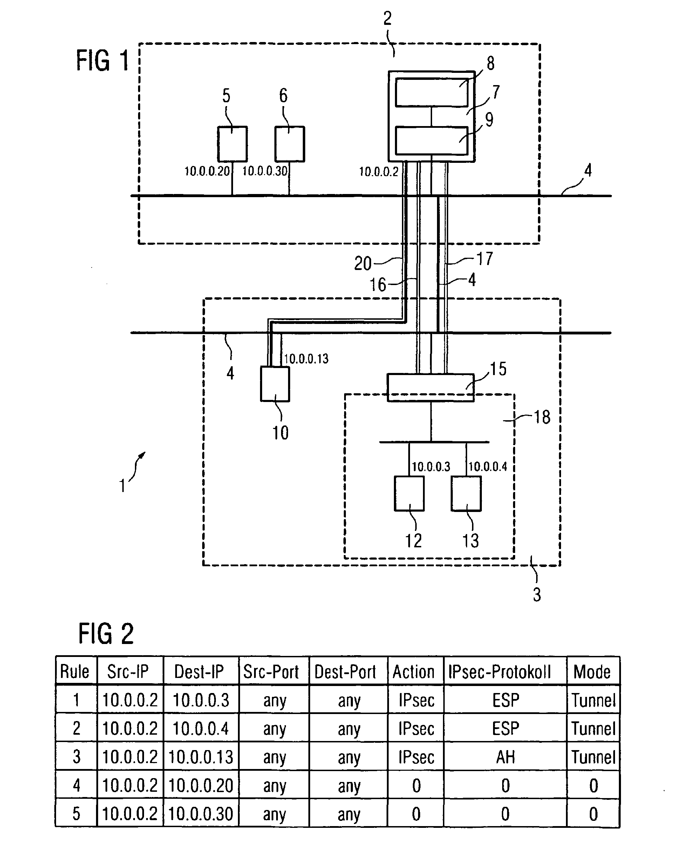

In Figur 1 ist der prinzipielle Aufbau eines Automatisierungsnetzes 1 dargestellt. Gezeigt sind im Wesentlichen die an der Kommunikation teilnehmenden Geräte, häufig als Teilnehmer bezeichnet, und dazu erforderliche physikalische Verbindungen. Weitere Teile des Automatisierungssystems in einer prozesstechnischen Anlage sind der Übersichtlichkeit wegen nicht dargestellt. Das Automatisierungsnetz 1 ist in dieser Darstellung unterteilt in ein Büronetz 2 und ein Produktionsnetz 3. Diese Darstellung wurde in Anlehnung an die bisherige Situation gewählt, in welcher Büronetz und Produktionsnetz voneinander getrennt ausgebildet und über ein Gateway miteinander verbunden waren. Über das Büronetz eingetragene Hackerangriffe konnten daher nur schwer in das Produktionsnetz gelangen. In dem gezeigten Ausführungsbeispiel sind Büronetz 2 und Produktionsnetz 3 über eine Leitung 4 direkt miteinander verbunden und damit quasi verschmolzen. Die Datenübertragung erfolgt in beiden Netzen beispielsweise mit Ethernet TCP/IP. Im Büronetz 2 befinden sich nicht prozessnahe Geräte, zum Beispiel ein Server 5, ein Büro-PC 6 und ein PC 7 als Programmiergerät oder Projektierungstool, der in eine Applikation 8 und eine Tunnelkomponente 9 unterteilt ist. Prozessnahe Geräte, zum Beispiel ein Automatisierungsgerät 10, ein Messumformer 12 und ein Automatisierungsgerät 13 sind in dem Produktionsnetz 3 angeordnet. Die den einzelnen Geräten zugeordneten IP-Adressen sind jeweils unmittelbar beim zeichnerischen Symbol der Geräte angegeben. Selbstverständlich umfassen das Büronetz 2 und das Produktionsnetz 3 noch weitere Geräte, die in der Zeichnung der Übersichtlichkeit wegen nicht dargestellt sind. Die dargestellten Geräte 12 und 13 des Produktionsnetzes 3 gehören zur selben Automatisierungszelle 18. Ihnen ist ein transparenter Tunnel-Proxy 15 vorgeschaltet, der als Stellvertreter für den Messumformer 12 und das Automatisierungsgerät 13 einen Endpunkt eines Tunnels 16 bzw. eines Tunnels 17 realisiert. Die beiden gegenüberliegenden Tunnelendpunkte werden durch die Tunnelkomponente 9 des Personal Computers 7 gebildet. Der transparente Tunnel-Proxy 15 ist somit als Tunnelendpunkt zuständig für die IP-Adressen 10.0.0.3 und 10.0.0.4 des Messumformers 12 bzw. des Automatisierungsgeräts 13. Die beiden Geräte 12 und 13 kommen daher mit geringeren Ressourcen aus, da sie nicht in der Lage sein müssen, einen Tunnelendpunkt zu realisieren. Das leistungsfähigere Automatisierungsgerät 10 ist dagegen selbst in der Lage, eine gesicherte Datenübertragung auszuführen, so dass zwischen den Personal Computer 7 und diesem Automatisierungsgerät 10 ein weiterer Tunnel 20, über welchen Daten nach dem IPsec-Protokoll übertragen werden können, eingerichtet ist. Mit den beiden anderen Teilnehmern 5 und 6 am Automatisierungsnetz 1 kommuniziert der Personal Computer 7 ohne eine Sicherung der Datenübertragung. Die zur Festlegung der Verbindungsart, ob eine gesicherte Datenübertragung durchgeführt werden soll oder nicht, erforderlichen Sicherheitseinstellungen werden durch den Personal Computer 7 bei der Verbindungsaufnahme vorgenommen und z. B. in Form einer später anhand Figur 2 näher erläuterten Tabelle in der Tunnelkomponente 9 abgespeichert. Dazu wird beim Verbindungsaufbau zu Teilnehmern, die sich im Büronetz 2 befinden, zunächst ein ungesicherter Datenzugriff initiiert, da hier mit hoher Wahrscheinlichkeit diese Art der Sicherheitseinstellung beim gewünschten Kommunikationspartner erwartet werden kann.

In dem beschriebenen Ausführungsbeispiel wird also die Art des ersten Zugriffs, ob gesichert oder ungesichert, vom Ziel abhängig gemacht. Dieses Wissen um die Wahrscheinlichkeit, welche Art des Datenzugriffs eher erwartet werden kann, erfordert eine Konfiguration, das heißt zu jedem Ziel muss bekannt sein, welches Zugriffsverfahren zu verwenden ist.

Alternativ zu dem beschriebenen Ausführungsbeispiel oder ergänzend hierzu ist es möglich, die Art des ersten Zugriffs in Abhängigkeit des zugreifenden Teilnehmers, insbesondere in Abhängigkeit dessen Einsatzzwecks, festzulegen. Ein Programmiergerät beispielsweise, mit dem man in der Regel Automatisierungsgeräte anspricht und nur gelegentlich eine Datei von einem ungesicherten Server holt, wird vorzugsweise so parametriert, dass er zunächst eine gesicherte Kommunikation versucht. Wenn dagegen nur eine geringe Anzahl von Geräten im Netzwerk vorhanden ist, die eine gesicherte Datenübertragung erfordern, wäre eine Parametrierung des Programmiergeräts in der Art sinnvoll, dass zunächst eine ungesicherte Kommunikation versucht wird. Prinzipiell ist es auch möglich, durch einen Teilnehmer zu lernen, auf welche Art die Zugriffe in der Mehrzahl erfolgreich durchgeführt oder abgewiesen werden und je nach Lernergebnis sein Zugriffsverfahren zu optimieren. Das heißt, wenn zunächst ein ungesicherter Zugriff versucht und dieser beispielsweise in 90% der Fälle abgewiesen wird, ändert der jeweilige Teilnehmer seine Parametrierung und versucht in Zukunft Zugriffe mit zunächst gesicherter Datenübertragung.

Nach dieser kurzen Erläuterung einer Alternative wird nun wieder fortgefahren mit der Beschreibung des oben eingeleiteten Ausführungsbeispiels, in welchem der Personalcomputer 7 zunächst einen ungesicherten Datenzugriff initiiert.

Falls der Kommunikationswunsch abgewiesen wird, stellt der Personal Computer seine Sicherheitseinstellung auf gesicherten Datenzugriff. Wird dagegen die Kommunikation zugelassen, so setzt der Personal Computer 7 seine Sicherheitseinstellung auf ungesicherten Datenzugriff und speichert diese Einstellung in der Tabelle ab. Zu den im Produktionsnetz 3 angeordneten Geräten, die üblicherweise einen gesicherten Datenzugriff erfordern, versucht der Personal Computer 7 zur Verbindungsaufnahme zunächst einen gesicherten Datenzugriff. Wird dieser durch den angesprochenen Teilnehmer zugelassen, so setzt der Personal Computer 7 seine zugehörige Sicherheitseinstellung ebenfalls auf gesicherten Datenzugriff. Bei Abweisen des Kommunikationswunschs oder wenn innerhalb einer vorbestimmten Zeit keine Reaktion des angesprochenen Kommunikationspartners erfolgt, wird die zugehörige Sicherheitseinstellung des Personal Computers 7 dagegen auf ungesicherten Datenzugriff gesetzt. Eine weitere Möglichkeit besteht darin, die Sicherheitseinstellungen des gewünschten Kommunikationspartners abzufragen und als eigene Sicherheitseinstellung des Personal Computers 7 zu übernehmen, abzuspeichern und für spätere Datenzugriffe zu verwenden.

Figur 2 zeigt ein Beispiel einer Tabelle, in welcher die Sicherheitseinstellungen, die der Personal Computer 7 bei der Aufnahme von Verbindungen zu den übrigen Teilnehmern ermittelt hat, abgelegt sind. Die Sicherheitseinstellungen (IPsec-Policy) bestehen aus Regeln (Rule 1...5), die beschreiben, wie IP-Pakete zu behandeln sind. Jede dieser Regeln besitzt einen Satz Selektoren (Src-IP, Dest-IP, ...) und Aktionen (Action, ...). Anhand der Selektoren wird dem jeweiligen IP-Paket eine Aktion zugeordnet. Im gezeigten Ausführungsbeispiel ist für IPsec-Verbindungen der Tunnelmode fest vorgegeben. Alternativ könnte selbstverständlich auch der IPsec-Mode variabel in Abhängigkeit des gewünschten Kommunikationsteilnehmers eingestellt werden. Wie die ersten drei Regeln (Rule 1, Rule 2, Rule 3) angeben, erfolgen Zugriffe auf die Geräte 12, 13 und 10 mit der Destination-IP 10.0.0.3, 10.0.0.4 bzw. 10.0.0.13 unabhängig von dem jeweils gewählten Port (Src-Port = Dest-Port = any) mit IPsec-Protokoll im Tunnelmode. Bei Zugriffen auf die beiden erst genannten Teilnehmer 12 und 13 wird das ESP-Protokoll angewandt, bei Zugriffen auf den Teilnehmer 10 das AH-Protokoll. Datenzugriffe auf die Teilnehmer 5 und 6 erfolgen entsprechend der Regel 4 bzw. 5 ohne Verschlüsselung (Action = 0). Selbstverständlich können auch die in diesem Ausführungsbeispiel vorgegebenen Parameter, zum Beispiel IPsec mit Tunnelprotokoll, nach dem Verfahren dynamisch bei der Verbindungsaufnahme festgelegt werden.

## Patentansprüche

1. Verfahren zur Festlegung von Sicherheitseinstellungen in einem Automatisierungsnetz (1) für einen Datenzugriff eines ersten Teilnehmers (7) auf einen zweiten Teilnehmer (5, 6, 10, 12, 13) über das Automatisierungsnetz, wobei der erste Teilnehmer (7) die Sicherheitseinstellungen des zweiten Teilnehmers (5,6) ermittelt und seine Sicherheitseinstellungen in Abhängigkeit der Sicherheitseinstellungen des zweiten Teilnehmers vornimmt, **dadurch gekennzeichnet,**
**dass** der erste Teilnehmer (7) einen ungesicherten Datenzugriff oder einen gesicherten Datenzugriff auf den zweiten Teilnehmer (56) initiiert,
**dass** der erste Teilnehmer (7) im Fall eines zuvor initiierten ungesicherten Datenzugriffs seine Sicherheitseinstellungen auf gesicherten Datenzugriff setzt, falls der ungesicherte Datenzugriff durch den zweiten Teilnehmer (56) abgewiesen wird, dass der erste Teilnehmer (7) seine Sicherheitseinstellungen auf ungesicherten Datenzugriff setzt, falls der ungesicherte Datenzugriff durch den zweiten Teilnehmer (5,6) zugelassen wird,
**dass** der erste Teilnehmen (7) im Fall eines zuvor initiierten gesicherten Datenzugriffs seine Sicherheitseinstellung auf gesicherten Datenzugriff setzt, falls der gesicherte Datenzugriff durch den zweiten Teilnehmer (5,6) zugelassen wird, dass der erste Teilnehmer (7) seine Sicherheitseinstellungen auf ungesicherten Datenzugriff setzt, falls der gesicherte Datenzugriff durch den zweiten Teilnehmern (5,6) abgewiesen wird oder nicht innerhalb einer vorbestimmten Zeit zugelassen wird, und
**dass** eine vorgenommene Sicherheitseinstellung abgespeichert und für spätere Datenzugriffe verwendet wird.

2. Verfahren nach Anspruch 1, **dadurch, gekennzeichnet, dass** der erste Teilnehmer (7) durch eine Abfrage die Sicherheitseinstellungen des zweiten Teilnehmers (5,6) ermittelt, dass der erste Teilnehmer (7) seine Sicherheitseinstellungen auf gesicherten Datenzugriff setzt, falls die Sicherheitseinstellungen des zweiten Teilnehmers (5,6) auf gesicherten Datenzugriff gesetzt sind, dass der erste Teilnehmer (7) seine Sicherheitseinstellungen auf ungesicherten Datenzugriff setzt, falls die Sicherheitseinstellungen des zweiten Teilnehmer (5,6) auf ungesicherten Datenzugriff gesetzt sind oder die Abfrage nicht innerhalb einer vorbestimmten Zeit beantwortet wird.

3. Verfahren nach Anspruch 1 oder 2, **dadurch gekennzeichnet, dass** die Sicherheitseinstellung angibt, ob für Datenzugriffe das IPsec-Protokoll verwendet ist oder nicht.

4. Teilnehmer (7) zur Durchführung des Verfahrens nach Anspruch 1, der derart ausgebildet ist, dass er zur Festlegung seiner Sicherheitseinstellungen für einen Datenzugriff auf einen zweiten Teilnehmer (5,6) über das Automatisierungsnetz (1) die Sicherheitseinstellungen des zweiten Teilnehmers ermittelt und seine eigenen Sicherheitseinstellungen in Abhängigkeit der Sicherheitseinstellungen des zweiten Teilnehmers (5,6) vornimmt, **dadurch gekennzeichnet , dass** der Teilnehmer (7) derart ausgebildet ist, dass er einen ungesicherten Datenzugriff oder einen gesicherten Datenzugriff auf den zweiten Teilnehmer (5,6) initiiert,
dass er im Fall eines zuvor initiierten ungesicherten Datenzugriffs seine Sicherheitseinstellungen auf gesicherten Datenzugriff setzt, falls der ungesicherte Datenzugriff durch den zweiten Teilnehmer (5,6) abgewiesen wird, dass er seine Sicherheitseinstellungen auf ungesicherten Datenzugriff setzt, falls der ungesicherte Datenzugriff durch den zweiten Teilnehmer (5,6) zugelassen wird,
dass er im Fall eines zuvor initiierten gesicherten Datenzugriffs seine Sicherheitseinstellung auf gesicherten Datenzugriff setzt, falls der gesicherte Datenzugriff durch den zweiten Teilnehmer (5,6) zugelassen wird, dass er seine Sicherheitseinstellungen auf ungesicherten Datenzugriff setzt, falls der gesicherte Datenzugriff durch den zweiten Teilnehmer (5,6) abgewiesen wird oder nicht innerhalb einer vorbestimmten Zeit zugelassen wird, und
dass er eine vorgenommene Sicherheitseinstellung abspeichert und für spätere Datenzugriffe verwendet.

## Claims

1. Method for stipulating security settings in an automation network (1) for data access by a first subscriber (7) to a second subscriber (5, 6, 10, 12, 13) via the automation network, wherein the first subscriber (7) ascertains the security settings of the second subscriber (5, 6) and makes its security settings on the basis of the security settings of the second subscriber, **characterized**
**in that** the first subscriber (7) initiates nonsecure data access or secure data access to the second subscriber (5, 6), in that the first subscriber (7), in the event of nonsecure data access having previously been initiated, sets its security settings to secure data access if the nonsecure data access is rejected by the second subscriber (5, 6), in that the first subscriber (7) sets its security settings to nonsecure data access if the nonsecure data access is permitted by the second subscriber (5, 6),
**in that** the first subscriber (7), in the event of secure data access having previously been initiated, sets its security setting to secure data access if the secure data access is permitted by the second subscriber (5, 6), in that the first subscriber (7) sets its security settings to nonsecure data access if the secure data access is rejected by the second subscriber (5, 6) or is not permitted within a predetermined time, and in that a security setting that has been made is stored and is used for later data access operations.

2. Method according to Claim 1, **characterized in that** the first subscriber (7) ascertains the security settings of the second subscriber (5, 6) by means of a request, **in that** the first subscriber (7) sets its security settings to secure data access if the security settings of the second subscriber (5, 6) are set to secure data access, **in that** the first subscriber (7) sets its security settings to nonsecure data access if the security settings of the second subscriber (5, 6) are set to nonsecure data access or there is no response to the request within a predetermined time.

3. Method according to Claim 1 or 2, **characterized in that** the security setting indicates whether or not the IPsec protocol is used for data access operations.

4. Subscriber (7) for carrying out the method according to Claim 1, which subscriber is designed such that it stipulates its security settings for data access to a second subscriber (5, 6) via the automation network (1) by ascertaining the security settings of the second subscriber and making its own security settings on the basis of the security settings of the second subscriber (5, 6), **characterized in that** the subscriber (7) is designed such that it initiates nonsecure data access or secure data access to the second subscriber (5, 6),
**in that**, in the event of nonsecure data access having previously been initiated, it sets its security settings to secure data access if the nonsecure data access is rejected by the second subscriber (5, 6), **in that** it sets its security settings to nonsecure data access if the nonsecure data access is permitted by the second subscriber (5, 6),
**in that**, in the event of secure data access having previously been initiated, it sets its security setting to secure data access if the secure data access is permitted by the second subscriber (5, 6), **in that** it sets its security settings to nonsecure data access if the secure data access is rejected by the second subscriber (5, 6) or is not permitted within a predetermined time, and
**in that** it stores a security setting that has been made and uses it for later data access operations.

## Revendications

1. Procédé de fixation de réglage de sécurité dans un réseau ( 1 ) d'automatisation pour un accès d'un premier participant ( 7 ) aux données d'un deuxième participant ( 5, 6, 10, 12, 13 ) par l'intermédiaire du réseau d'automatisation, le premier participant ( 7 ) déterminant les réglages de sécurité du deuxième participant ( 5, 6 ) et effectuant ses réglages de sécurité en fonction des réglages de sécurité du deuxième participant, **caractérisé**
**en ce que** le premier participant ( 7 ) déclenche un accès non sécurisé ou un accès sécurisé aux données du deuxième participant ( 5, 6 ),
**en ce que** le premier participant ( 7 ) met, dans le cas d'un accès aux données non sécurisées déclenché auparavant, ses réglages de sécurité sur l'accès aux données sécurisées si l'accès aux données non sécurisées est rejeté par le deuxième participant ( 5, 6 ), en ce que le premier participant ( 7 ) met ses réglages de sécurité sur un accès aux données non sécurisées si l'accès aux données non sécurisées est autorisé par le deuxième participant ( 5, 6 ),
**en ce que** le premier participant ( 7 ) met, dans le cas d'un accès aux données non sécurisées déclenché auparavant, ses réglages de sécurité sur l'accès aux données sécurisées si l'accès aux données sécurisées est autorisé par le deuxième participant ( 5, 6 ), en ce que le premier participant ( 7 ) met ses réglages de sécurité sur un accès aux données non sécurisées si l'accès aux données sécurisées est rejeté par le deuxième participant ( 5, 6 ) ou n'est pas autorisé pendant un temps déterminé à l'avance, et
**en ce qu'**un réglage de sécurité effectuée est mémorisé et est utilisé pour des accès ultérieurs aux données.

2. Procédé suivant la revendication 1, **caractérisé en ce que** le premier participant ( 7 ) détermine par une demande les réglages de sécurité du deuxième participant ( 5, 6 ), **en ce que** le premier participant ( 7 ) met ses réglages de sécurité sur un accès aux données sécurisées si les réglages de sécurité du deuxième participant ( 5, 6 ) sont mis sur un accès aux données sécurisées, **en ce que** le premier participant ( 7 ) met ses réglages de sécurité sur un accès aux données non sécurisées si les réglages de sécurité du deuxième participant ( 5, 6 ) sont mis sur un accès aux données non sécurisées ou s'il n'a pas été répondu à la demande dans un temps déterminé à l'avance.

3. Procédé suivant la revendication 1 ou 2, **caractérisé en ce que** le réglage de sécurité indique si, pour des accès aux données, le programme Ipsec est utilisé ou ne l'est pas.

4. Participant ( 7 ) pour effectuer le procédé suivant la revendication 1, qui est constitué, de manière à ce qu'il détermine, pour la fixation de ses réglages de sécurité, pour un accès aux données d'un deuxième participant ( 5, 6 ) par l'intermédiaire du réseau d'automatisation, les réglages de sécurité du deuxième participant et effectue ses propres réglages de sécurité en fonction des réglages de sécurité du deuxième participant ( 5, 6 ), **caractérisé en ce que** le participant ( 7 ) est constitué, de manière à déclencher un accès non sécurisé ou un accès sécurisé aux données du deuxième participant ( 5, 6 ),
**en ce que**, dans le cas d'un accès aux données non sécurisées déclenché auparavant, il met ses réglages de sécurité sur un accès aux données sécurisées si l'accès aux données non sécurisées est rejeté par le deuxième participant ( 5, 6 ), **en ce qu'**il met ses réglages de sécurité sur un accès aux données non sécurisées si l'accès aux données non sécurisées est autorisé par le deuxième participant ( 5, 6 ),
**en ce que**, dans le cas d'un accès aux données sécurisées déclenché auparavant, il met son réglage de sécurité sur un accès aux données sécurisées si l'accès aux données sécurisées est autorisé par le deuxième participant ( 5, 6 ), **en ce qu'**il met ses réglages de sécurité sur un accès aux données non sécurisées si l'accès aux données sécurisées est rejeté par le deuxième participant ( 5, 6 ) ou n'est pas autorisé pendant un temps déterminé à l'avance, et
**en ce qu'**il mémorise un réglage de sécurité effectué et l'utilise pour des accès ultérieurs aux données.
